(19) Europäisches Patentamt
European Patent Office
Office européen des brevets

(11) Publication number: **0 356 027 A1**

# (12) EUROPEAN PATENT APPLICATION

(21) Application number: **89307754.5**

(22) Date of filing: **31.07.89**

(51) Int. Cl.⁴: **C08K 13/02 , G02B 5/22 , C08L 33/06 , //(C08K13/02, 3:16,5:521),(C08K13/02,3:16, 5:524)**

(30) Priority: **29.07.88 JP 191478/88**
**11.07.89 JP 178265/89**
**11.07.89 JP 178266/89**

(43) Date of publication of application: **28.02.90 Bulletin 90/09**

(84) Designated Contracting States: **DE FR GB IT NL**

(71) Applicant: **KYOWA GAS CHEMICAL INDUSTRY CO., LTD.**
**8-2, 3-chome, Nihonbashi**
**Chuo-ku, Tokyo(JP)**

(72) Inventor: **Nakao, Kozo**
**2-5a-501, Kyowa-cho Nakajo-machi**
**Kitakanbara-gun Niigata-ken(JP)**
Inventor: **Nakamura, Tatsuya**
**1-7a-701, Kyowa-cho Nakajo-machi**
**Kitakanbara-gun Niigata-ken(JP)**
Inventor: **Hara, Akio**
**1908, Tsuiji Nakajo-machi**
**Kitakanbara-gun Niigata-ken(JP)**

(74) Representative: **Rees, David Christopher et al**
**Kilburn & Strode 30 John Street**
**London WC1N 2DD(GB)**

## (54) Near-infrared ray absorbent resin composition and method for production thereof.

(57) A near-infrared ray absorbent resin composition, comprising 100 parts by weight of a clear resin and a reaction mixture of 0.01 to 10 parts by weight of tungsten hexachloride, based on 100 parts by weight of said clear resin, and at least 0.1 mol of at least one member selected from the group consisting of phosphoric esters and phosphorous esters per mol of said tungsten hexachloride, and a method for production thereof.

EP 0 356 027 A1

# NEAR-INFRARED RAY ABSORBENT RESIN COMPOSITION AND METHOD FOR PRODUCTION THEREOF

## BACKGROUND OF THE INVENTION

### Field of the Invention:

This invention relates to a novel near-infrared ray absorbent resin composition exhibiting relatively high transmittance in the visible region and an excellent near-infrared ray absorbing property and to a method for the production thereof.

### Description of the Prior Art:

It is disclosed in U.S. Patent No. 3,692,688 that a material exhibiting an excellent near infrared ray absorbing ability is obtained by dissolving tungsten hexachloride ($WCl_6$) and stannous chloride ($SnCl_2.2H_2O$) in methyl methacrylate syrup and polymerizing the resultant syrup.

Our follow-up experiment on the disclosure of the U.S. Patent has revealed that the composition obtained by dissolving $WCl_6$ and $SnCl_2.2H_2O$ in the methyl methacrylate syrup changes color to dark blue and generously absorbing near-infrared ray and that the cast plate, a near-infrared ray absorbent material, obtained by cast polymerizing the composition in a cell is discolored and markedly degraded in the ability to absorb the near-infrared rays, is not allowed to resume the dark blue color and manifest the ability to absorb the near-infrared ray unless it is exposed to the ultraviolet light or the sunlight, and has the problem that it succumbs to the phenomenon of photochromism, viz. the discoloration which develops during a protracted standing in a dark place. The serious degradation of spectral characteristic and the slow progress of photochromism which occur during the course of polymerization of the conventional near-infrared ray absorbent material containing $WCl_6$ and $SnCl_2.2H_2O$ are highly undesirable phenomena for the manufacture of such commercial products as optical filters and heat ray absorbing glazing materials which are expected to possess stable quality.

For use in the method which uses methyl methacrylate syrup as a reaction solvent and- dissolves $WCl_6$ and $SnCl_2$ $.2H_2O$ in this reaction solvent, the matrix resin for a filter is limited to polymethyl methacrylate and the method for the production thereof is also limited. Thus, the conventional method has the problem that the product thereof is incapable of fulfilling numerous requirements imposed thereon from the commercial point of view with respect to shape, workability, and surface property.

This invention, conceived in the urge to solve the various problems of the prior art mentioned above, aims to provide a near infrared radiation-absorbing resin composition which calls for no exclusive use of methyl methacrylate syrup as a reaction solvent, exhibits a highly preferable near infrared radiation-absorbing ability, and excels in stability and a method for the production thereof.

## SUMMARY OF THE INVENTION

After a diligent study in search of a near infrared radiation-absorbing resin composition liberated from the loss of stability during the course of polymerization and allowed to curb the phenomenon of photochromism and a method for the production thereof, we have found that the composition aimed at is attained by combined use of tungsten hexachloride and at least one member selected from the group consisting of phosphoric esters and phosphorous esters. This invention has been accomplished as the result.

The essence of this invention resides in:

(1) A near-infrared ray absorbent resin composition comprising a clear resin and a reaction mixture between 0.01 to 10 parts by weight, based on 100 parts by weight of the clear resin, of tungsten hexachloride and at leat 0.1 mol of at least one member selected from the group consisting of phosphoric esters and phosphorous esters per mol of tungsten hexachloride.

(2) A method for the production of a near-infrared ray absorbent resin composition, which comprises causing 0.01 to 10 parts by weight of tungsten hexachloride to react with at least 0.1 mol, per mol of

tungsten hexachloride, of at least one member selected from the group consisting of a phosphoric ester and a phosphorous ester and mixing the resultant reaction mixture with 100 parts by weight of a clear resin.

(3) A method for the production of a near-infrared ray absorbent resin composition, which comprises mixing (a) 100 parts by weight of an unsaturated monomer having a (meth)acrylic monoester monomer as a main component and optionally containing a polymer of the monoester monomer and/or a (meth)acrylic polyester monomer with (b) a mixture obtained by the reaction of 0.01 to 10 parts by weight of tungsten hexachloride and at least 0.1 mol of at least one member selected from the group consisting of a phosphoric ester and a phosphorus ester per mol of tungsten hexachloride and polymerizing the resultant mixture in the presence of a radical polymerization initiator.

(4) A method for the production of a near-infrared ray asorbent resin composition, which comprises mixing (a) 100 parts by weight of an unsaturated monomer having a (meth)acrylic monoester monomer as a main component and optionally containing a polymer of a monoester monomer and/or a (meth)acrylic polyester monomer with 0.05 to 2 parts by weight of tungsten hexachloride, at least one member selected from the group consisting of 0.05 to 10 parts by weight of a phosphoric ester and 0.05 to 2 parts by weight of a phosphorous ester and polymerizing the resultant mixture in the presence of a radical polymerization initiator.

## BRIEF DESCRIPTION OF THE DRAWINGS

Fig. 1, Fig. 2, and Fig. 3 are diagrams each illustrating a transmission spectrum.

## EXPLANATION OF THE PREFERRED EMBODIMENT

Now, the present invention will be described in detail below. The term "clear resin" as used in the present invention refers to any resin which has no particular restriction except for the sole requirement that it should be substantially clear and should cause no appreciable absorption or scattering of light. Specifically, the resins which are usable herein include acrylic resin, styrene type resin, vinyl chloride resin, polycarbonate resin, olefin type resin, epoxy resin, and polyamide resin, for example. These resin are not always required to be used independently. A blend of two or more resins selected from the group of resins mentioned above may be effectively used herein on the condition that the blend should be substantially clear. Among other clear resins enumerated above, a thermoplastic or cross-linked (meth)acrylic ester resin, namely an acrylic resin, proves to be particularly preferable in terms of the dispersibility to be manifested in the reaction mixture possessing the near-infrared ray absorbing ability, and a methacrylic resin solely comprising methyl methacrylate or containing not less than 50% of methyl methacrylate proves to be particularly preferable where weatherability also dictates due consideration.

The expression "unsaturated monomer having a (meth)acrylic monoester comonomer as a main component and optionally containing a polymer of the monoester monomer" as used in this invention means a (meth)acrylic monoester monomer, a mixture of such monoester monomers, a mixture having a (meth)acrylic monoester as a main component and containing other unsaturated monomer copolymerizable with the main component, or a syrup having a polymer of the monomer dissolved in the aforementioned monomer or monomer mixture. The proportion of the (meth)acrylic monoester in the mixture thereof with the other unsaturated monomer is not less than 50% by weight, preferably not less than 60% by weight, and more preferably not less than 80% by weight. Specifically, the (meth)acrylic monoesters which are usable herein include methyl (meth)acrylate (meaning methyl acrylate and methyl methacrylate; similarly applicable herein below), ethyl (meth)acrylate, butyl (meth)acrylate, cyclohexyl (meth)acrylate, 2-ethylhexyl (meth)acrylate, methoxyethyl (meth)acrylate, ethoxyethyl (meth)acrylate, N,N-diethylaminoethyl (meth)-acrylate, glycidyl (meth)acrylate, tetrahydroxyfurfuryl (meth)acrylate, benzyl (meth)acrylate, and hydroxyethyl (meth)acrylate, for example. These (meth)acrylic monoesters may be use either singly or in the form of a mixture of two or more members. Where weatherability demands due consideration, methyl methacrylate proves to be particularly preferable. The other unsaturated monomers which are copolymerizable and usable herein include (meth)acrylic acids, (meth)acrylonitriles, (meth)acrylamides, styrene, α-methylstyrene, vinyl toluene, and maleic anhydride, for example. As means for obtaining a partial polymer of a (meth)acrylic ester, the method which obtains the partial polymer by bulk prepolymerization as popularly practised and the method which consists in dissolving the polymer in the monomer may be cited. For the sake of facility of the action of pouring, the partial polymer is preferable to be adjusted to a polymer

content of not more than 35% by weight.

The (meth)acrylic polyesters which are usable in this invention include polyol (meth)acrylates, polyester (meth)acrylates, epoxy (meth)acrylates, and polyurethane (meth)acrylates, for example. Typical examples of the polyol (meth)acrylates are ethylene glycol di(meth)acrylate, triethylene glycol di(meth)acrylate, tripropylene glycol di(meth)acrylate, trimethylol ethane di(meth)acrylate, neopentyl glycol di(meth)acrylate, trimethylol propane tri(meth)acrylate, and pentaerythritol tetra(meth)acrylate. Typical examples of polyester (meth)acrylate are (meth)acrylate of polyester synthesized of the reaction of a polyalcohol and a polybasic acid; the example of polyalcohol is ethylene glycol, 1,4-butane diol, diethylene glycol, trimethylol propane, polyethylene glycol or pentaerythritol, and the examples of the polybasic acid is phthalic acid, adipic acid, maleic acid, itaconic acid, or terephthalic acid. Typical examples of the epoxy (meth)acrylates are (meth)-acrylates of epoxy resin such as bisphenol A-epichlorohydrin type, phenol novolak-epichlorohydrin type, and alicyclic type epoxy resins. Typical examples of polyurethane (meth)acrylates are (meth)acrylates of such isocyanates as tolylene diisocyanate and diphenyl methane diisocyanate. One member or a mixture of two or more members selected from the group of monomers mentioned above may be used.

The expression "(a) unsaturated monomer having a (meth)acrylic monoester monomer as a main component and optionally containing a polymer thereof and/or (meth)acrylic polyester monomer [hereinafter referred to as "(meth)acrylic ester monomer, etc."]" as used in the present invention means an unsaturated monomer having the aforementioned (meth)acrylic monoester monomer as a main component and optionally containing a polymer thereof, the aforementioned (meth)acrylic polyester monomer, or a mixture thereof. The composition thereof may be varied in a wide range.

The phosphoric ester to be used in the present invention is a phosphate represented by the following formula (1):

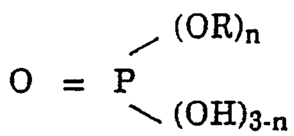

(1)

wherein n is 1, 2, or 3 and R is alkyl, allyl, aryl, aralkyl, or (meth)acryloxyalkyl group having 1 to 18 carbon atoms or a derivative thereof. Typical examples of the phosphate are monoethyl phosphate, diethyl phosphate, triethyl phosphate, monobutyl phosphate, dibutyl phosphate, tributyl phosphate, monobutoxyethyl phosphate, dibutoxyethyl phosphate, tributoxyethyl phosphate, mono(2-ethylhexyl) phosphate, bis(2-ethylhexyl) phosphate, tris(2-ethylhexyl) phosphate, monophenyl phosphate, diphenyl phosphate, triphenyl phosphate, mono(2-chloroethyl) phosphate, bis(2-chloroethyl) phosphate, tris(2-chloroethyl) phosphate, mono(2-hydroxyethyl methacrylate) phosphate, bis(2-hydroxyethyl methacrylate phosphate, and tris(2-hydroxyethyl methacrylate) phosphate. Among phosphate mentioned above, diesters, triesters and a mixture of such esters prove to be particularly preferable.

The phosphorous ester to be used in this invention is a phosphite represented by the following formula (2):

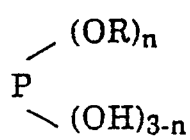

(2)

wherein n is 1, 2, for 3 and R is an alkyl, allyl, aryl, aralkyl, or (meth)acryloxyalkyl group having 1 to 18 carbon atoms or a derivative thereof. Typical examples of the phosphite are monoethyl phosphite, diethyl phosphite, triethyl phosphite, monobutyl phosphite, dibutyl phosphite, tributyl phosphite, mono(2-ethylhexyl) phosphite, bis(2-ethylhexyl) phosphite, tris(2-ethylhexyl) phosphite, monodecyl phosphite, didecyl phosphite, tridecyl phosphite, monosteraryl phosphite, distearyl phosphite, tristearyl phosphite, monophenyl phosphite, diphenyl phosphite, triphenyl phosphite, mono(nonylphenyl) phosphite, bis(nonylphenyl) phosphite, tris(nonylphenyl phosphite, mono(2,3-dichloropropyl) phosphite, bis(2,3-dichloropropyl) phosphite and tris(2,3-dichloropropyl) phosphite. Among other phosphates and phosphites mentioned above, diesters and triesters prove to be particularly preferable.

The amounts of tungsten hexachloride, phosphoric ester, and phosphorous ester to be used in the present invention may be suitably varied, depending on the particular transmittance of the resin composition aimed at to the visible and near infrared region and the thickness of the shaped plate of the resin

composition. Generally, the amount of tungsten hexachloride is in the range of 0.01 to 10 parts by weight, preferably 0.05 to 5 parts by weight, based on 100 parts by weight of the clear resin. If the amount of tungsten hexachloride is less than 0.01 part by weight, no sufficient improvement is attained in the near infrared ray absorbing ability. If this amount exceeds 10 parts by weight, no improvement is observed in the near infrared ray absorbing ability and the raw material for polymerization has the possibility of entraining persistant insolubles.

The amount of the phosphoric ester and/or the phosphorous ester is at least 0.1 mol, preferably 1 to 300 mols, and more preferably 1 to 100 mols, per mol of tungsten hexachloride. If the amount of the phosphoric ester and/or the phosphorous ester is less than 0.1 mol of tungsten hexachloride, no sufficient improvement is attained in the near infrared ray absorbing ability. For the purpose of precluding the occurrence of bleed on the surface of the resin composition and enabling the near-infrared ray absorbing ability to enjoy lasting stability, this amount is preferable to be at least 1 mol. Conversely if the amount of the phosphoric ester and/or the phosphorous ester is unduly large and exceeds 500 mols per mol of tungsten hexachloride, there arises the disadvantage that the resin suffers from serious degradation of mechanical strength and other physical properties.

The reaction mixture (b) of the present invention is obtained by using tungsten hexachloride and a phosphoric ester, tungsten hexachloride and a phosphorous ester, or tungsten hexachloride and a phosphoric ester and a phosphorous ester as starting materials. From the standpoint of solubility and reactivity of tungsten hexachloride ($WCl_6$), it is preferable to have the raw materials so stirred as to be thoroughly mixed and allowed to react with each other. When the phosphoric ester and/or phosphorous ester happens to be in a liquid state, the reaction may be effected by adding $WCl_6$ into the liquid or by adding $WCl_6$ and phsophoric ester and/or phosphorous ester jointly into a solvent. When the phosphoric ester and/or phosphorous ester happens to be in a solid state, the reaction may be effected by heating the ester to a temperature exceeding the melting point thereof and adding $WCL_6$ to the resultant molten ester or by having the ester and $WCl_6$ dissolved in a solvent. The solvent to be used herein has no particular restriction except for the requirement that it should be capable of dissolving the reaction mixture and should possess a boiling point not conspicuously lower than the reaction temperature. The amount of the solvent is preferable to be at least enough to permit thorough solution of the starting materials. As regards the reaction conditions for the acquisition of the reaction mixture, the reaction is preferable to be carried out somewhere between normal room temperature or a temperature slightly higher than the room temperature and the highest temperature at which the phosphoric ester or phosphorous ester induces no vigorous decomposition. To be more specific, the reaction is carried out at a temperature in the range of 20° to 200°C, prefrably 30° to 180°C, and more preferably 50° to 150°C, for a period of not more than 30 hours, preferably in the range of 0.5 to 20 hours, and more preferably 1 to 10 hours.

As described above, the reaction mixture of this invention is obtained by the reaction of 0.01 to 10 parts by weight of tungsten hexachloride with at least 0.1 mol of the phosphoric ester and/or phosphorous ester per mol of tungsten hexachloride. Water may be added, when necessary for the purpose of further improving the near-infrared ray absorbing ability and enhancing the lasting stability, to the reaction system mentioned above. The addition of water may be made suitably before, during, or after the reaction of tungsten hexachloride with the phosphoric ester and/or phosphorous ester. The amount of water thus added is in the range of 0.01 to 1 parts by weight, preferably 0.1 to 0.5 part by weight, based on 100 parts by weight of the clear resin.

The resin composition of the present invention comprises 100 parts by weight of the clear resin mentioned above and the reaction mixture between the amounts of tungsten hexachloride and phosphoric ester and/or phosphorous ester specified above. It possesses an excellent near infrared ray absorbing ability and retains this ability stably.

As means for producing the near infrared ray absorbent resin composition of the present invention, the method which comprises mixing the aforementioned reaction mixture possessing the near infrared ray absorbing ability with the clear resin and consequently incorporating the reaction mixture in the clear resin, the method which comprising adding the reaction mixture to the component monomers of the clear resin, preferably such polymerizable raw materials as (meth)acrylic esters mentioned above and subjecting the resultant mixture to polymerization, and the method which comprises mixing the polymerizable raw materials with tungsten hexachloride and the phosphoric ester and/or phosphorous ester and subjecting the resultant mixture to polymerization may be cited.

As means for the incorporation of the reaction mixture in the clear resin, the methods of extrusion casting, injection molding, press molding, and film casting can be cited. The incorporation by the extrusion molding or injection molding is attained by a procedure which comprises uniformly blending the reaction mixture of tungsten hexachloride and the phosphoric ester and/or phosphorous ester with pellets of a

thermoplastic clear resin, conveying the blended mixture to a molding machine or melting the blended pellets thereby forming pellets of the resin containing the reaction product, and thereafter conveying the pellets to the molding machine to be molded. The press molding is attained by the use of a pressing machine. The molding machine or pressing machine to be used in the present invention may be any of the conventional molding machines heretofore generally used for the manufacture of molded articles, sheets, and section profiles. The cast film is obtained by a procedure which comprises dissolving the clear resin and the near-infrared ray absorbent reaction mixture in the solvent thereby preparing a polymer solution and casting this polymer solution on a rotary drum, a glass plate, or a metallic plate thereby expelling of the solvent.

By the method which comprises adding the reaction mixture to the component monomers of the clear resin, preferably such polymerizable raw materials as (meth)acrylic ester monomer, etc, and subjecting the resultant mixture to polymerization, this polymerization is carried out in the presence of a radical polymerization initiator. For example, the raw material for the polymerization is preferable to incorporate therein the radical polymerization initiator in an amount in the range of 0.0001 to 2.0 parts by weight, preferably 0.01 to 1.0 part by weight, based on 100 parts by weight of the raw material and to undergo thermal polymerization. The azo type polymerization initiators which are usable for this purpose include 2,2′-azobis-isobutylonitrile, 1, 1′-azobis-1-cyclohexane carbonitrile, 2,2′-azobis-2,4-dimethylvaleronitrile, and 2,2′-azobis-4-methoxy-2,4-dimethylvaleronitrile, for example. The peroxide type polymerization initiators which are usable herein include t-butylperoxyisobutyrate, 1,1′-bis-t-butylperoxy-3,3,5-trimethyl cyclohexane, and lauroyl peroxide, for example. Since the peroxide type polymerization initiator is capable of inducing discoloration, though slightly, in the visible and near infrared regions, depending on the kind and amount of the initiator to be added, the azo type polymerization initiator is used desirably in the polymerization. The polymerization is carried out by the technique of bulk polymerization, preferably cast polymerization. As means for the case polymerization, the method which comprises pouring the composition into the space between two glass plates opposed to each other with the matched edges thereof sealed with a gasket and heating the composition. Though the polymerization temperature varies with the kind of the radical polymerization initiator, it is generally in the range of 40° to 140°C. Preferably, the polymerization in the first stage is carried out at a temperature in the range of 40° to 90°C and the polymerization in the last stage at a temperature in the range of 100° to 140°C.

When the near-infrared ray absorbent resin composition of this invention is polymerized in the presence of a photo-polymerization initiator, the photo-polymerization initiator is preferable to be incorporated in the composition in an amount in the range of 0.05 to 20 parts by weight, desirably 0.1 to 10 parts by weight, and more desirably 0.2 to 5 parts by weight, based on 100 parts by weight of the polymerizable raw material.

The photo-polymerization initiators which are usable herein include acetophenone, 2,2-diethoxy acetophenone, 2-hydroxy-2-methylpropiophenone, benzophenone, 4,4′-bisdimethylaminobenzophenone, 1-hydroxycyclohexylphenyl ketone, t-butyl anthraquinone, benzoin, and benzoin ethyl ether, for example. One member or a mixture of two or more members selected from the group of photo-polymerization initiators mentioned above may be used. The polymerization is attained by spreading the mixture consisting mainly of the polymerizable raw material and the photo-polymerization initiator on a substrate, for example, or pouring the mixture in a cell and exposing the mixture on the substrate or in the cell to light for necessary solidification. The substrate thus used in made of glass, plastic, or metal. When the cell is used, at least one surface of the cell must permit passage of light as required for initiating the photo-polymerization. Thus, the cell is desired to be made of transparent glass or plastic, for example. The light sources which are usable for the purpose of the exposure include a low-voltage mercury-vapor lamp, a high-pressure mercury-vapor lamp, an extra high-pressure mercury-vapor lamp, a xenone lamp, a metal halide lamp, and an ultraviolet-light fluorescent lamp, for example.

Further, in the case of the method which comprises mixing the component units of the clear resin, preferably the polymerizable raw materials such as (meth)acrylic ester monomer, etc. with tungsten hexachloride and the phosphoric ester and/or phosphorous ester and subjecting the resultant mixture to polymerization, similarly to the method which involves the addition of the reaction mixture to the polymerizable raw materials, the polymerization may be carried out in the presence of a radical polymerization initiator or a photo-polymerization initiator. In this case, the incorporation of tungsten hexachloride and the phosphoric ester and/or phosphorous ester in the polymerizable raw materials is effected conveniently at normal room temperature or a temperature slightly higher than the room temperature. In consideration of the solubility of tungsten hexachloride in the polymerizable raw materials, the amount of tungsten hexachloride to be added is desired to be in the range of 0.05 to 2 parts by weight, preferably 0.1 to 1 part by weight, based on 100 parts by weight of the polymerizable raw materials, the amount of the phosphoric

ester in the range of 0.05 to 10 parts by weight, preferably 0.05 to 5 parts by weight, based on 100 parts by weight of the polymerizable raw materials, and the amount of the phosphorous ester in the range of 0.05 to 2 parts by weight, preferably 0.1 to 1 part by weight, based on 100 parts by weight of the polymerizable raw materials.

Even when the contents of tungsten hexachloride and the phosphoric ester and/or phosphorous ester in the resin material are fixed, the resin material formed in the shape of a plate has the transmittance thereof varied with the thickness of the plate. Thus, the contents may be fixed so that the resin material finally obtained in the shape of a plate will acquire necessary transmittance.

Further, in the present invention, the near-infrared ray absorbing ability of the resin composition can be further improved and the lasting stability of the near infrared radiation-absorbing ability can be further enhanced by adding water into the polymerization system. The amount of water thus added is preferable to be in the range of 0.01 to 1.0 part by weight, preferably 0.1 to 0.5 part by weight, based on 100 parts by weight of the polymerizable raw materials.

In working the present invention, various additives such as dyes and pigment for coloration, antioxidants, stabilizers represented by ultraviolet ray absorbing agent, flame retardants, plasticizers, polymerization regulators, and mold release agents may be incorporated in the composition. When the resin composition is intended for use as a coating composition to be applied to a substrate, for example, the polymerizable raw materials may incorporate therein an organic solvents. The kinds and amounts of these additives and solvents may be freely selected within the ranges fit for the purpose of this invention.

The near infrared ray absorbent resin composition to be produced as described above, when shaped in the form of it can be utilized as optical filters or a heat ray absorbing glazing materials readily vested with a near infrared ray absorbing ability. Thus, the resin composition is usable advantageously for the manufacture of heat ray absorbent material, protective filter for naked eyes, infrared ray absorbed filter for photosensitive semiconductor, and safe light filter for infrared-sensitive material.

Now, the present invention will be described more specifically below with reference to working examples. It should be noted, however, that this invention is not limited to these examples. In the examples, the term "part" meant "part by weight" and the transmission spectrum and the transmittance of the resin obtained were determined with a spectrophotometer (made by Hitachi, Ltd. and marketed under product code of "U-3410") except for those in Examples 18 to 30, these physical properties were determined with a similar spectrophotometer (produced by Hitachi, Ltd. and marketed under product code of "323").

Example 1

In a three-neck flask having an inner volume of 100 ml, 12.0 parts of tungsten hexachloride ($WC1_6$) and 27.76 g of a mixture of monobutyl phosphate and dibutyl phosphate (produced by Johoku Chemical Co., Ltd. and marketed under product code of "JP-504") were placed, stirred with the blades of a stirrer made of Teflon (tetrafluoroethylene resin). The three-neck flask containing the stirred mixture was immersed in an oil bath and heated gradually at 120 °C for two hours to induce reaction of the mixture. In 100 parts of methyl methacrylate, 0.5 part of the reaction mixture consequently obtained as vested with a near infrared radiation-absorbing ability was dissolved. In the resultant solution, 0.6 part of an ultraviolet light-absorbing agent (produced by Ciba-Geigy and marketed under trademark designation of "Tinuyvin 327") and 0.15 part of 2,2′-azobis-2,4-dimethyl valeronitrile as a polymerization catalyst were mixed. The resultant composition was poured into a cell prepared by interposing a gasket between two parallel glass sheets as popularly practised. The composition thus held in the cell was immersed in a water bath at 60 °C for three hours. It was then heated in an air bath at 120 °C for two hours to complete the polymerization in process.

The polymerized composition in the cell was cooled and then removed from the glass sheets, to obtain a resin plate 3.12 mm in thickness.

The resin plate was analyzed for transmission spectrum. The result is indicated by the curve A in Fig. 1. Comparison of the transmission spectrum A with the transmission spectrum B shown in the same diagram as obtained of an ordinary methacrylic resin plate 3 mm in thickness (produced by Kyowa Gas Chemical Industry Co., Ltd. and marketed under trademark designation of "Paraglass") reveals that this resin plate showed comparatively high transmittance to the light of visible region and exhibited an excellent near infrared ray absorbing ability not found in the ordinary methacrylic resin plate.

Example 2

In a three-neck flask having an inner volume of 100 ml, 9.6 parts of tungsten hexachloride and 20.0 parts of JP-504 were treated in the same manner as in Example 1 for reaction.

In 100 parts of methyl methacrylate having 0.4 part of water dissolved in advance therein, 0.54 part of the resultant reaction mixture was dissolved. The solution thus produced and 0.1 part of a peel agent (produced by E, I. duPont de Nemours & Co., Inc. and marketed under trademark designation of "Zelec UN") added thereto were subjected to polymerization in the presence of an ultraviolet ray absorbing agent and a polymerization catalyst by following the procedure of Example 1. Consequently, a resin plated 3.15 mm in thickness was obtained. This resin plate was tested for transmittance at 450 to 1,400 nm. The result was as shown in Table 1. The resin plate exhibited as high a near-infrared ray absorbing ability as the resin plate obtained in Example 1.

The resin plate obtained in this example and a resin plate obtained by following the procedure of this example, except that the addition of water was omitted, were left standing under the harsh conditions of 80 °C and 50% of RH for five days by way of test for near infrared ray absorbing ability and time-course change of this ability. It was found that the transmittance at 1,000 nm was changed from 0.7% to 6.1% in the resin plate involving no addition of water, whereas the transmittance was changed only from 0.1% to 0.8% in the resin plate of this example. This fact clearly indicated that the addition of water clearly enhanced the stability of the near infrared ray absorbing ability.

Example 3

A resin plate 2.85 mm in thickness was obtained by causing 5.0 parts of tungsten hexachloride to react with 26.8 parts of tributyl phosphate in the same manner as in Example 1, dissolving 0.8 part of the resultant reaction mixture in 100 parts of methyl methacrylate, and subjecting the resultant solution to polymerization in the presence of an ultraviolet ray absorbing agent and a polymerization catalyst by following the procedure of Example 1. The resin plate thus obtained was tested for transmittance. The result was as shown in Table 1.

Example 4

A resin plate 2.89 mm in thickness was obtained by heating 0.4 part of tungsten hexachloride and 2.0 parts of tributyl phosphite in a test tube at 80 °C for one hour for reaction, dissolving 0.4 part of the resultant reaction mixture in 100 parts of methyl methacrylate, and subjecting the resultant solution to polymerization in the presence of an ultraviolet ray absorbing agent and a polymerization catalyst by following the procedure of Example 1. The resin plate was tested for transmittance. The result was as show in Table 1.

Example 5

A resin film 0.12 mm in thickness was obtained by causing 5.0 g of tungsten hexachloride to react with 21.2 g of dibutyl phosphate (produced by Daihachi Kagaku Kogyosho K.K. and marketed under product code of "DP-4") in the same manner as in Example 1, mixing 10.5 parts of the resultant reaction mixture with 100 parts of methyl methacrylate having 0.3 part of water dissolved in advance therein, and subjecting the resultant mixture to polymerization in the presence of 1.2 parts of an ultraviolet ray absorbing agent (Tinuvin 327) and 0.6 part of 2,2′-azobis-2,4-dimethylvaleronitrile as popularly practised. The resin film thus obtained was tested for transmittance. The result was as shown in Table 1.

Example 6

A resin plate 3.40 mm in thickness was obtained by causing 16.0 parts of tungsten hexachloride to react with 33.1 part of JP-504 in the same manner as in Example 1, mixing 0.54 parts of the resultant reaction mixture with 100 parts of cyclohexyl methacrylate, and subjecting the resultant mixture to polymerization in the presence of an ultraviolet ray bsorving agent and a polymerization catalyst by following the procedure of Example 1. The resin plate was tested for transmittance. The result was as shown in Table 1.

Example 7

A mixture containing 60 parts of styrene, 36 parts of methyl methacrylate, and 4 parts of neopentyl glycol dimethacrylate was mixed with 0.09 part of the reaction mixture obtained in Example 6. The resultant mixture was subjected to polymerization in the presence of 0.3 part of Tinuvin 327 and 0.2 part of 2,2′-azobis-2,4-dimethyl valeronitrile as a polymerization catalyst by following the procedure of Example 1, to obtain a resin plate 2.88 mm in thickness. The resin plate was tested for transmittance. The result was as shown in Table 1.

Example 8

In a test tube, 2.0 parts of di-2-ethylhexyl phthalate was placed and 0.4 part of tungsten hexachloride and 0.79 part of dibutyl phosphate were added thereto and they were stirred and, at the same time, gradually heated and left reacting at 100°C for one hour. By mixing 1.66 parts of the resultant reaction mixture with 100 parts of methyl methacrylate and subjecting the resultant mixture to polymerization in the presence of an ultraviolet ray absorbing agent and a polymerization catalyst in the same manner as in Example 1, a resin plate 3.21 mm in thickness was obtained. The resin plate was tested for transmittance. The result was as shown in Table 1.

Example 9

In a test tube, 2.0 parts of di-2-ethylhexyl phthalate was placed and 0.4 part of tungsten hexachloride and 0.075 part of di-2-ethylhexyl phosphate (produced by Johoku Chemical Co., Ltd. marketed under product code of "LB-58") were added thereto and they were stirred and, at the same time, gradually heated and left at 100°C for one hour. By mixing 1.66 parts of the resultant reaction mixture with 100 parts of methyl methacrylate and subjecting the resultant mixture to polymerization in the presence of an ultraviolet ray absorbing agent and a polymerization catalyst in the same manner as in Example 1, a resin plate 2.91 mm in thickness was obtained. The resin plate was tested for transmittance. The result was as shown in Table 1.

Example 10

In a three-neck flask, 2.0 parts of tungsten hexachloride and 25.0 parts of diethyl phosphite were heated and stirred at 80°C for one hour for reaction. A syrup prepared in advance by dissolving 5 parts of polymethyl methacrylate (produced by Kyowa Gas Chemical Industry Co., Ltd. and marketed under trademark designation of "Parapet "F-1000B") in 95 parts of methyl methacrylate and 0.3 part of the resultant reaction mixture added thereto were subjected to polymerization in the presence of an ultraviolet ray absorbing agent and a polymerization catalyst in the same manner as in Example 1, to produce a resin plate 2.5mm in thickness. The resin plate was tested for transmittance. The result was as shown in Table 1.

Example 11

A reaction mixture was obtained by causing 5.0 parts of tungsten hexachloride to react with 26.86 parts of a mixture of mono-2-ethylhexyl phosphate and di-2-ethylhexyl phosphate (produced by Johoku Chemical Co., Ltd. and marketed under product code of "JP-508") in the same manner as in Example 1. In 100 parts of methyl methacrylate, 2.0 parts of the resultant reaction mixture was dissolved. The resultant solution, with 0.5 part of a photo-polymerization initiator incorporated therein, was poured into a cell prepared inadvance by interposing a gasket between two parallel glass plates and polymerized by exposure to the light from a fluoresent chemical lamp (produced by Toshiba, Ltd. and marketed under product code of "FL40BL") for 30 minutes, to produce a resin plate 2.34 mm in thickness. The resin plate was tested for transmittance. The result was as shown in Table 1.

Example 12

Reaction was caused on 5.0 parts of tungsten hexachloride, 9.66 parts of dibutyl phosphate, and 8.67 parts of monobutyl phosphate (produced by Daihachi Kagaku Kogyosho and marketed under product code of "MP-4") in the same manner as in Example 1. In 100 parts of methyl methacrylate, 10 parts of the resultant reaction mixture was dissolved. The resultant solution was subjected to photo-polymerization in the presence of 0.1 part of a photo-polymerization initiator (produced by Merck & Co. Inc. and marketed under trademark designation of "Darocure-1173") in the same manner as in Example 10, to produce a resin film 0.09 mm in thickness. The resin film was tested for transmittance. The result was as shown in Table 1.

Example 13

Five (5) parts of the reaction mixture obtained in Example 6 was mixed with 0.3 part of water and heated for solution. The resultant solution was mixed with 100 parts of urethane acrylate (produced by Toa Gosei Chemical Industry Co., Ltd. and marketed under trademark designation of "Aronix M-1210"). The resultant resin composition, with 1.0 part of a photo-polymerization initiator (Darocure-1173), was applied in a thickness of 0.09 mm on a glass plate and subjected to photo-polymerization in the same manner as in Example 10. The resin film was tested for transmittance. The result was as shown in Table 1.

Example 14

In 100 parts of urethane acrylate, 10 parts of the resultant reaction mixture obtained in the same manmer as in Example 12 was dissolved and 1.0 part of photo polymerization initiator (Darocure 1173) was added. The resultant resin composition was poured into a cell prepared by interposing a gasket between two pallallel methacrylic resin plates 2 mm in thickness, and subjected to photo polymerization in the same manmer in Example 10, to obtain a laminated plate having urethane acrylate film 0.12 mm in thickness. The laminated plate made of two resin plates and thin film was binded completely. The laminated plate was tested for transmittance. The result was shown in Table 1.

Example 15

In a three-neck flask, 48.0 parts of tungsten hexachloride and 99.3 parts of JP-504 were caused to react with each other in the same manner as in Example 1. The resultant reaction mixture was cooled and, with 10.9 parts of water added thereto, heated and stirred at 60 °C for one hour for solution.

A mixed solution containing 70 parts of dipentaerythritol hexaacrylate, 20 parts of pentaerythritol triacrylate, and 10 parts of neopentyl glycol diacrylate was mixed with 10 parts of the reaction mixture obtained as described above. The resultant mixture, with 5 parts of a photo-polymerization initiator (marketed under trademark designation of "Irgacure-184") added thereto, was dissolved and applied in a thickness of 0.07 mm on a silicon-treated polyester film (produced by Soken Kako K.K. and marketed under product code of PET-7512"), and subjected to photo-polymerization in the same manner as in Example 11. The resin film was tested for transmittance. The result was as shown in Table 1.

Example 16

A mixture of 0.56 part of the reaction mixture obtained in Example 2 and 100 parts of polymethyl methacrylate (Parapet F-1000B) was kneaded in a laboratory mill at 250 °C for 15 minutes. The resultant resin composition was molded in a press at 200 °C for five minutes to produce a flat plate 2 mm in thickness. The resin plate was tested for transmittance. The result was as shown in Table 1.

Example 17

A solution of 100 parts of polyvinyl chloride (produced by Riken Vinyl Kogyo K.K. and marketed under product code "NS-1840") in 700 parts of tetrahydrofuran was mixed with 6 parts of the reaction mixture obtained in Example 6, cast on a glass plate, and left standing thereon until the solvent was expelled, to produce a film 150 µm in thickness. The film was tested for transmittance. the result was as shown in

"Table 1.

Example 18

A syrup was prepared by mixing 5 parts of polymethyl methacrylate (produced by Kyowa Gas Chemical Industry Co., Ltd. and marketed under trademark designation of "Parakpet HR-1000P") with 95 parts of methyl methacrylate. This syrup, 0.1 part of triphenyl phosphite, and 0.1 of a mixture of monobutoxyethyl phosphate and dibutoxyethyl phosphate (produced by Johoku Chemical Co., Ltd. and marketed under product code of "JP-506") were stirred, then dissolved in conjunction with 0.2 part of tungsten hexachloride, and subsequently mixed with 0.2 part of 2,2′-azobis-2,4-dimethyl valeronitrile, to produce a blue composition. Then, in accordance with the conventional method, the composition was poured into a cell prepared in advance by interposing a gasket between two flat glass plates so as to impart a thickness of 3 mm to the final product. The cell filled with the composition was immersed in a water bath at 60 °C for six hours and then heated in air bath at 120 °C for two hours to complete the polymerization in process. The polymerized composition in the die was cooled and then separated from the glass plates. Consequently, a haze-free and blue colored clear resin plate 3 mm in thickness was obtained.

The resin plate produced a transmission spectrum as indicated by C in Fig. 2. Comparison of this transmission spectrum with the transmission spectrum D shown in the same diagram as obtained of the ordinary methacrylic resin plate containing no ultraviolet ray absorbing agent reveals that this resin plate exhibited relatively high transmittance to the light in the visible region and an excellent near infrared ray absorbing ability not found in the ordinary methacrylic resin plate. This resin plate, even after one month's standing in a dark place, showed no sign of discoloration.

Examples 19 to 22

Haze-free blue clear resin plates were obtained by repeating the procedure of Example 18, except that tungsten hexachloride, a phosphoric ester, or a phosphorous ester were mixed in varying ratios corresponding to the compositions shown in Table 2. These plates were analyzed for transmission spectra to determine transmittances at 400 to 1400 nm. Similarly to the resin plate obtained in Example 18, these resin plates exhibited a highly satisfactory near infrared ray absorbing ability.

Examples 23 and 24

Resin compositions, during the mixture of tungsten hexachloride with a phosphorous ester, incorporated therein ZELEC UN for the purpose of enhancing the facility with which the resin plate polymerized on the glass sheet was released from the glass plate. Since ZELEC UN was composed mainly of a phosphoric ester, it functioned as a mold releaser agent for the resin plate and, at the same time, exhibited an effect in improving the near infrared ray absorbing ability. The resin compositions shown in Table 2 were subjected to polymerization, to produce haze-free plates. The transmittances of these sheets were as shown in Table 3.

Examples 25 to 30

Resin compositions shown in Table 2 were subjected to polymerization, to produce a haze-free plate. The transmittance of these plates were as shown in Table 3.

It is clearly noted from Table 3 that the haze-free resin plates obtained in Examples 19 to 30 were excellent in the near-infrared ray absorbing ability and showed relatively high values of transmittance in the visible region.

Example 31

One hundred (100) parts of cyclohexyl methacrylate and 0.3 part of a mixture of monobutyl phosphate and dibutyl phosphate added thereto were stirred and dissolved in conjunction with 0.15 part of tungsten

hexachloride. The resultant solution was mixed with 0.6 part of an ultraviolet ray absorbing agent (Tinuvin 327) and 0.15 part of 2,2-azobis-2,4-dimethylvaleronitrile as a polymerization catalyst. The polymerizing composition thus obtained was poured into a cell obtained by interposing a gasket between two parallel glass plates. The cell holding the composition was immersed in a water bath at 60 °C for three hours and then heated in an air bath at 120 °C for two hours to complete the polymerization in process. The polymerized composition was cooled and peeled off the glass plates, to obtain a resin plate 3.5 mm in thickness.

The resin plate was analyzed for transmission spectrum. The result was as indicated by the curve E in Fig. 3. Comparison of this transmission spectrum with the transmission spectrum of the ordinary methacrylic resin plate indicated by the curve B in the same diagram reveals that the resin plate exhibited relatively high transmittance to the light in the visible region and a highly desirable near infrared ray absorbing ability not found in the ordinary methacrylic resin plate. Even after one months standing in a dark place, this resin plate showed no sign of discoloration.

Example 32

A syrup was prepared by mixing 5 parts of polymethyl methacrylate (Parapet HR-1000P) with 95 parts of methyl methacrylate. The syrup was dissolved in conjunction with 0.4 parts of water and then mixed with 0.3 part of triphenyl phosphite and further with 0.2 part of tungsten hexachloride to produce a polymerizable composition. This polymerizable composition was dissolved in conjunction with 0.4 part of a mold releaser agent (ZELEC UN) and 0.15 part of 2,2′-azobis-2,4-dimethylvaleronitrile and then subjected to polymerization in the same manner as in Example 31. Consequently, a resin plate 2.7 mm in thickness was obtained. The resin plate was analyzed for transmission spectrum. The transmittance at 400 to 1400 nm found consequently was as shown in Table 4. Similarly to the resin plate obtained in Example 31, this resin plate exhibited a highly preferable near infrared ray absorbing ability. In the test for degradation by aging under the conditions of 80 °C and 50% RH, the resin plate of this example obtained by the addition of water offered greater resistance to discoloration than the resin plate obtained without addition of water.

Example 33

Ninety (90) parts of urethane acrylate (Aronix M-1210) was mixed with 10 parts of methyl methacrylate, further mixed with 5.0 parts of a mixture of monobutoxyethyl phosphate and dibutoxyethyl phosphate (JP-506), and dissolved in conjunction with 1.0 part of tungsten hexachloride. The resultant solution, with 1.0 part of a photo-polymerization initiator (Darocure-1173) mixed therewith, was applied in a thickness of 100 µm on a glass plate and polymerized by exposure to the light from a fluorescent chemcial lamp for 10 minutes. The resin film consequently obtained was analyzed for transmission spectrum. The result was as shown in Table 4.

Control 1

One hundred (100) parts of methyl methacrylate was dissolved in conjunction with 0.01 part of a blue dye (produced by Dainichiseika Kogyo K.K. and marketed under trademark designation of "SEIKAGEN-O-BLUE BKH 1416) and then mixed with 0.008 part of 2,2′-azobis-isobutyronitrile as a polymerization catalyst. The resultant composition was poured in a cast produced by interposing a gasket between two glass plates as popularly practised. The cell holding the composition was immersed in a water tank at 80 °C for five hours and then heated in an air bath at 120 °C for two hours to complete the polymerization in process. The polymerized composition was cooled and then removed from the cast, to obtain a resin plate 3.05 mm in thickness. The resin plate was tested for transmittance at 450 to 1400 nm. The result was as shown in Table 4. The resin plate showed the maximum absroption at 637 nm and a transmittance of 10.8%. It showed substantially no absorption at wavelengths exceeding 700 nm.

Control 2

A dark blue solution was obtained by preparing a syrup adding 25 parts of polymethyl methacrylate to

75 parts of methyl methacrylate thereby preparing a syrup and dissolving this syrup in conjunction with 0.2 part of tungsten hexachloride ($WCl_6$) and 0.15 part of stannous chloride ($SnCl_2.2H_2O$). This blue solution was mixed with 0.05 part of 2,2′-azobis-2,4-dimethyl valeronitrile and poured into a cell formed by interposing a gasket between two glass plates as popularly practised. The cell holding the composition was immersed in a water bath at 60 °C for three hours and then heated in an air bath at 120 °C for two hours to complete the polyemrization in process. The polymerized composition was cooled and removed from the glass plate, to produce a resin plate 2.91 mm in thickness. The resin plate substantially lost the dark blue and assumed a very faint blue color. By the test for transmission spectrum, it was found to possess a very weak near infrared ray absorbing ability.

TABLE 1

| Example No. | Transmittane (%) | | | | | |
|---|---|---|---|---|---|---|
| | 450 nm | 600 nm | 800 nm | 1000 nm | 1200 nm | 1400 nm |
| 2 | 54.6 | 27.3 | 1.3 | 0.1 | 0.9 | 9.7 |
| 3 | 60.3 | 28.7 | 8.3 | 2.2 | 3.0 | 10.6 |
| 4 | 61.3 | 62.8 | 33.0 | 18.5 | 29.2 | 48.0 |
| 5 | 60.0 | 24.5 | 8.5 | 10.0 | 25.7 | 50.4 |
| 6 | 40.8 | 12.2 | 0.2 | 0.1 | 2.8 | 27.4 |
| 7 | 50.1 | 18.0 | 0.5 | 0.8 | 27.9 | 48.7 |
| 8 | 54.2 | 27.9 | 1.4 | 0.1 | 0.3 | 6.0 |
| 9 | 68.2 | 75.7 | 63.3 | 37.7 | 23.1 | 23.2 |
| 10 | 35.3 | 50.9 | 40.5 | 21.7 | 23.2 | 34.3 |
| 11 | 64.1 | 17.8 | 2.7 | 3.0 | 2.6 | 50.0 |
| 12 | 74.7 | 41.2 | 9.3 | 6.8 | 27.8 | 63.2 |
| 13 | 61.2 | 20.4 | 5.4 | 4.2 | 28.4 | 54.6 |
| 14 | 55.0 | 18.5 | 3.7 | 2.4 | 22.7 | 54.8 |
| 15 | 60.1 | 27.9 | 1.9 | 3.4 | 25.7 | 51.2 |
| 16 | 40.4 | 25.4 | 7.8 | 8.8 | 25.2 | 46.8 |
| 17 | 32.5 | 30.9 | 18.5 | 32.0 | 59.2 | 79.4 |

TABLE 2

| Example No. | Composition (parts by weight) | | | | | | | Thickness (mm) |
|---|---|---|---|---|---|---|---|---|
| | Polymethyl methacrylate | Methyl methacrylate | Methyl acrylate | Tungsten hexachloride | Phosphoric ester | Phosphorous ester | ZELEC UN | |
| 19 | 5.0 | 95.0 | - | 0.2 | JP-508* 0.1 | - | - | 5.0 |
| 20 | 0 | 100 | - | 0.3 | JP-506 3.0 | - | - | 3.0 |
| 21 | 10.0 | 90.0 | - | 0.8 | - | Triphenyl phosphite 0.2 | - | 3.0 |
| 22 | 5.0 | 95.0 | - | 0.2 | - | Diphenyl phosphite 0.1<br>Tristearyl phosphite 0.1 | - | 3.0 |
| 23 | 5.0 | 95.0 | - | 0.2 | - | Triphenyl phosphite 0.1 | 0.1 | 3.0 |
| 24 | 5.0 | 95.0 | - | 0.2 | - | Diphenyl phosphite 0.8 | 1.0 | 3.0 |
| 25 | 0 | 100 | - | 0.1 | JP-504* 0.3 | Diethyl phosphite 0.1 | - | 5.0 |
| 26 | 5.0 | 95.0 | - | 0.2 | JPV-704* 0.1 | Triphenyl phosphite 0.1 | - | 3.0 |
| 27 | 5.0 | 90.0 | 5.0 | 0.2 | JP-506 3.0 | Triphenyl phosphite 0.3 | - | 3.0 |
| 28 | 0 | 100 | - | 0.5 | JP-508* 0.2 | Triethyl phosphite 0.2 | - | 3.0 |
| 29 | 5.0 | 95.0 | - | 0.8 | Jp-504* 0.3 | Trinonylphenyl phosphite 0.1 | - | 3.0 |
| 30 | 5.0 | 95.0 | - | 0.2 | LB-58* 0.1 | Triphenyl phosphite 0.1 | - | 3.0 |

JP-504 :A mixture of monobutyl phosphate and dibutyl phosphate

JP-508 :A mixture of mono-(2-ethylhexyl) phosphate and bis(2-ethylhexyl) phosphate

JPV-704 :Acid phosphate containing vanadium

LB-58 :Bis-(2-ethylhexyl) phosphate

* Phosphate produced by Johoku Chemical Co., Ltd.

TABLE 3

| Example No. | Transmittance (%) | | | | | |
|---|---|---|---|---|---|---|
| | 400 nm | 600 nm | 800 nm | 1000 nm | 1200 nm | 1400 nm |
| 19 | 68.6 | 55.9 | 24.0 | 3.8 | 4.0 | 14.7 |
| 20 | 72.9 | 33.6 | 8.6 | 7.2 | 15.7 | 32.2 |
| 21 | 43.9 | 64.6 | 37.8 | 11.3 | 6.6 | 8.9 |
| 22 | 71.2 | 58.5 | 22.0 | 4.6 | 3.6 | 6.4 |
| 23 | 69.7 | 36.3 | 6.3 | 1.2 | 3.3 | 18.7 |
| 24 | 64.0 | 47.6 | 14.2 | 7.0 | 29.5 | 55.7 |
| 25 | 78.6 | 53.1 | 13.4 | 4.0 | 14.1 | 37.2 |
| 26 | 65.2 | 46.0 | 10.2 | 1.4 | 2.4 | 12.7 |
| 27 | 77.0 | 38.0 | 9.7 | 5.5 | 18.9 | 42.6 |
| 28 | 57.3 | 17.3 | 0.6 | 0.1 | 0.1 | 3.0 |
| 29 | 41.2 | 4.7 | 0.1 | 0.1 | 0.1 | 0.6 |
| 30 | 71.2 | 34.2 | 6.6 | 2.0 | 5.6 | 25.4 |

TABLE 4

| | Transmittance (%) | | | | | |
|---|---|---|---|---|---|---|
| | 450 nm | 600 nm | 800 nm | 1000 nm | 1200 nm | 1400 nm |
| Example 32 | 63.0 | 36.4 | 4.6 | 0.9 | 5.2 | 16.0 |
| Example 33 | 71.2 | 21.5 | 10.2 | 41.4 | 77.3 | 86.6 |
| Control 1 | 85.0 | 39.5 | 86.5 | 87.6 | 83.4 | 73.4 |

This invention, as described above, is directed to a near-infrared ray absorbent resin composition which is obtained by incorporating in a clear resin a reaction mixture obtained by the reaction of tungsten hexachloride with a phosphoric ester and/or a phosphorous ester. The resin composition thus produced, therefore, is neither so instable as to undergo discoloration during the course of polymerization nor susceptible of photochromism, viz. discoloration during a protracted standing in a dark place, and is useful as such commercial products as optical filter and heat ray absorbing glazing, for example. This invention is further directed to a method for the production of a near infrared ray absorbent resin composition by the step of mixing the clear resin with the reaction mixture mentioned above, to a method for the production of a near-infrared ray absorbent resin composition, which comprises mixing the reaction mixture mentioned above with an unsaturated monomer having a (meth)acrylic monoester monomer as a main component and optionally containing a polymer thereof and/or a (meth)acrylic polyester monomer and polymerizing the resultant mixture, and to a method for the production of a near-infrared ray absorbent resin composition, which comprises mixing 100 parts by weight of an unsaturated monomer having a (meth)acrylic monoester monomer as a main component and optionally containing a polymer thereof and/or a (meth)acrylic polyester with tungsten hexachloride, a phosphoric ester, and/or a phosphorous ester, and polymerizing the resultant mixture. Thus, the present invention offers many methods for the production of a near infrared ray absorbent resin composition. Since the resin composition of this invention has no possibility of inducing discoloration during the course of polymerization, the near infrared ray absorbent resin composition can be easily obtained in a desired hue by adjusting the hue during the course of preparation of the polymerizable raw materials.

## Claims

1. A near-infrared ray absorbent resin composition, characterised in that it comprises 100 parts by weight of a clear resin and a reaction mixture of 0.01 to 10 parts by weight of tungsten hexachloride, based on 100 parts by weight of the clear resin, and at least 0.1 mol of at least one member selected from phosphoric esters and phosphorous esters per mol of tungsten hexachloride.

2. A composition as claimed in Claim 1, characterised in that the clear resin is a (meth)acrylic ester resin, a cross-linked (meth)acrylic ester resin or a methacrylic resin.

3. An optical filter formed of a composition according to any of Claims 1 to 4, or formed of an article coated with a composition according to any of Claims 1 to 4.

4. A method for the production of a near-infrared ray absorbent resin composition, characterised by causing 0.01 to 10 parts by weight of tungsten hexachloride to react with at least 0.1 mol of at least one member selected from phosphoric esters and phosphorous esters per mol of tungsten hexachloride and mixing the resultant mixture with 100 parts by weight of a clear resin.

5. A method as claimed in Claim 4, characterised in that the clear resin is a methacrylic resin.

6. A method for the production of a near-infrared ray absorbent resin composition, characterised by mixing (a) 100 parts by weight of unsaturated monomers having a (meth)acrylic monoester monomer as a main component and optionally containing a polymer thereof and/or (meth)acrylic polyester monomers with (b) a mixture obtained by the reaction of 0.01 to 10 parts by weight of tungsten hexachloride with 0.1 mol of at least one member selected from phosphoric esters and phosphorous esters per mol of tungsten hexachloride and then polymerising the resultant mixture in the presence of a radical polymerisation initiator.

7. A method for the production of a near-infrared ray absorbent resin composition, characterised by mixing 100 parts by weight of an unsaturated monomer having a (meth)acrylic monoester monomer as a main component and optionally containing a polymer thereof and/or a (meth)acrylic polyester monomer with 0.05 to 2 parts by weight of tungsten hexachloride, at least one member selected from 0.05 to 10 parts by weight of a phosphoric ester and 0.05 to 2 parts by weight of a phosphorous ester and polymerising the resultant mixture in the presence of a radical polymerisation initiator.

8. A method as claimed in Claim 6 or Claim 7, characterised in that the polymerisable raw material (a) is an unsaturated monomer having methyl methacrylate as a main component and optionally containing a polymer thereof.

9. A method as claimed in any of Claims 6 to 8, characterised in that the radical polymerisation initiator is a photo-polymerisation initiator and the mixture is subjected to photo-polymerisation in the presence of the initiator.

10. A method as claimed in any of Claims 4 to 8, characterised in that the tungsten hexachloride is

reacted with the ester or esters at a temperature in the range of 20° to 200°C, and/or is carried out in the presence of 0.01 to 1 part by weight of water in the reaction system.

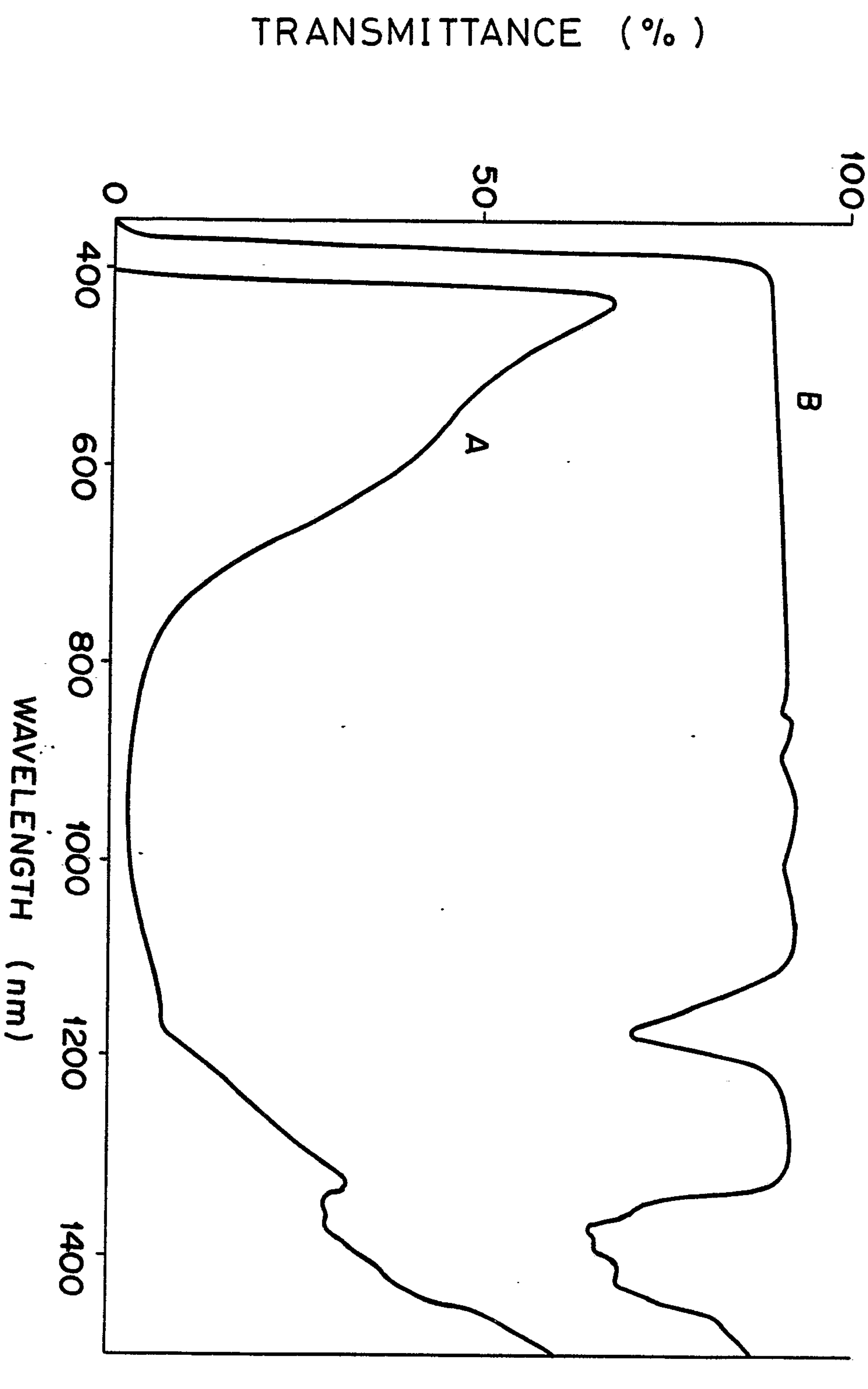
TRANSMITTANCE (% )
100
50
0
B
A
400
600
800
1000
1200
1400
WAVELENGTH (nm)

FIG.1

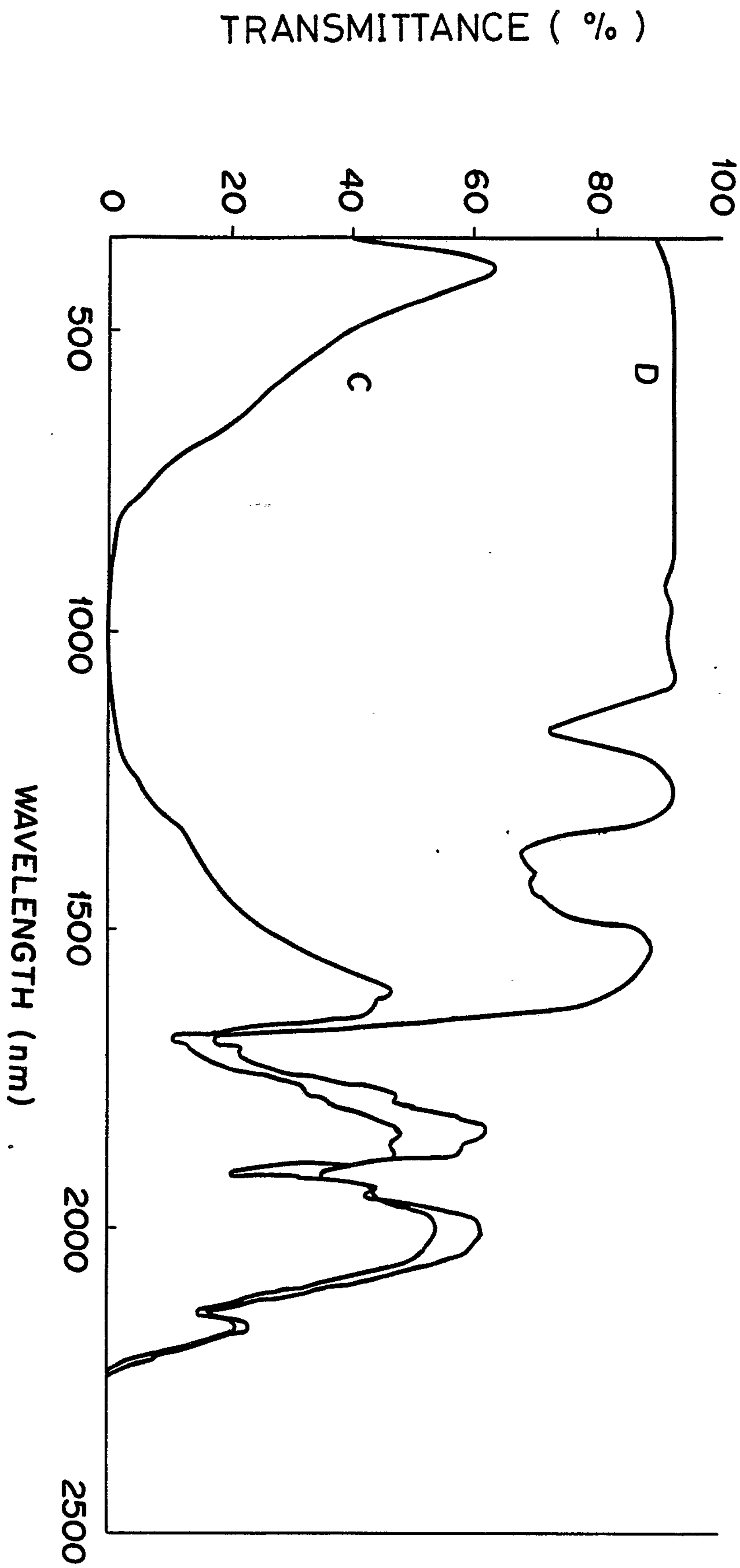
TRANSMITTANCE ( % )
100
80
60
40
20
0
D
C
500
1000
1500
2000
2500
WAVELENGTH (nm)

FIG. 2

FIG.3

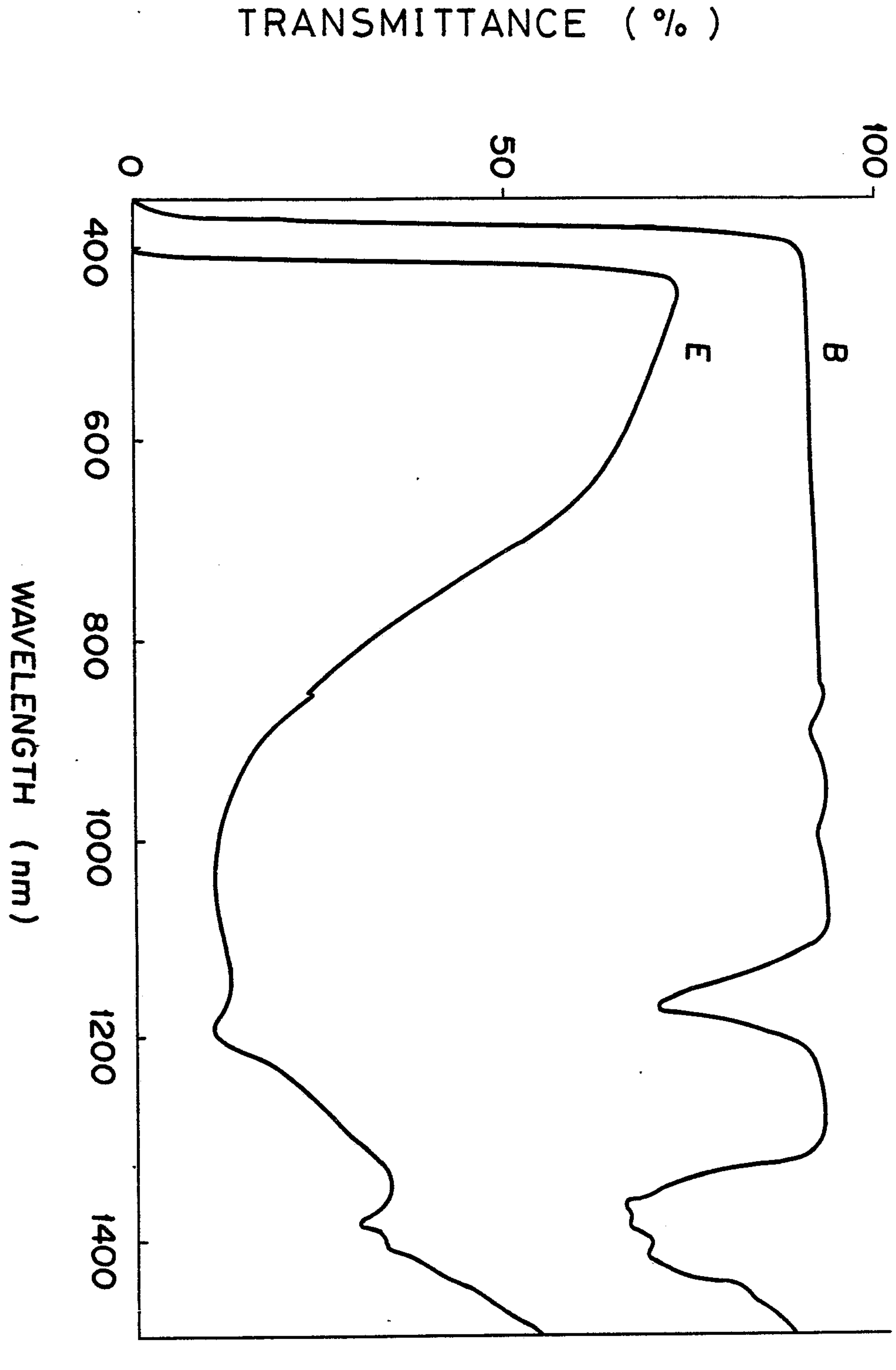
TRANSMITTANCE ( % )
0
50
100
400
600
800
1000
1200
1400
WAVELENGTH (nm)
B
E

European Patent Office

# EUROPEAN SEARCH REPORT

Application Number

EP 89 30 7754

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| D,Y | US-A-3 692 688 (G.A. CASTELLION et al.)<br>* Claims *<br>--- | 1-10 | C 08 K 13/02<br>G 02 B 5/22<br>C 08 L 33/06 //<br>(C 08 K 13/02<br>C 08 K 3:16<br>C 08 K 5:521)<br>(C 08 K 13/02<br>C 08 K 3:16<br>C 08 K 5:524) |
| Y | US-A-4 260 542 (S.F. JOYCE, III et al.)<br>* Claims; column 1, line 57 - column 5, line 3 *<br>--- | 1-10 | |
| A | US-A-4 721 738 (J.A. ELLIS et al.)<br>* Claims; column 2, line 5 - column 3, line 49 *<br>----- | 1 | |
| | | | TECHNICAL FIELDS SEARCHED (Int. Cl.5) |
| | | | C 08 K<br>C 08 L<br>G 02 B |

The present search report has been drawn up for all claims

| Place of search | Date of completion of the search | Examiner |
|---|---|---|
| THE HAGUE | 06-11-1989 | DE LOS ARCOS Y VELAZQUEZ |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)